# EUROPÄISCHE PATENTSCHRIFT

(11) **EP 3 497 149 B1**
(45) Veröffentlichungstag und Bekanntmachung des Hinweises auf die Patenterteilung: **24.06.2020**
(21) Anmeldenummer: 17715480.4
(22) Anmeldetag: 04.04.2017
(51) Int. Cl.: C08G 77/04, C08G 77/06

(54) **REAKTIVE SILOXANE UND VERFAHREN ZU IHRER HERSTELLUNG**
REACTIVE SILOXANES AND PROCESS FOR THE PRODUCTION THEREOF
SILOXANES RÉACTIFS ET LEURS PROCÉDÉS DE PRÉPARATION

(43) Veröffentlichungstag der Anmeldung: 19.06.2019
(73) Patentinhaber: Wacker Chemie AG, 81737 München (DE)
(72) Erfinder: STEPP, Michael, 5122 Überackern (AT); DEICHNER, Leonie, 92543 Guteneck (DE)
(74) Vertreter: Fritz, Helmut
(86) Internationale Anmeldenummer: PCT/EP2017/058013
(87) Internationale Veröffentlichungsnummer: WO 2018/184668

(56) Entgegenhaltungen:
- DE-A1-102014 212 698

## Beschreibung

Die Erfindung betrifft reaktive Siloxane mit einem Rückgrat aus organotrifunktionellen Siloxan-Einheiten sowie ein Verfahren zu ihrer Herstellung aus Lithium- oder Natriumsalzen von Organosilanolen (im Folgenden auch als Siliconate bezeichnet) mit Halogensilanen.

Die erfindungsgemäßen Siloxane der allgemeinen Formel (1)

R¹R²R³SiO-[R-Si(OSiR⁴R⁵R⁶)O]ₙ-SiR¹R²R³ (1)

(in der M-D-T-Q-Schreibweise für Siloxane, abgekürzt darstellbar als M-(T-M)ₙ-M, wobei T für RSiO_{3/2} und M für R₃SiO_{1/2} stehen) sind von industriellem Interesse u.a. als hochreaktive Vernetzer z.B. für optische und elektronische Anwendungen, als Ausgangsmaterialien für funktionelle Fluide, z.B. oberflächenaktive Verbindungen und als potenzielle Bausteine für Siloxan-Harze. Ihre Herstellung und Identifizierung wurde bislang nicht beschrieben.

Vorgeschlagen sind lineare Polysiloxane mit einem Rückgrat aus organotrifunktionellen Siloxan-Einheiten in EP1557451 als potentielle Bestandteile von additionsvernetzenden Siliconmischungen für Trennfolien erwähnt (Bestandteil B-1, allgemeine Formel (2) für den Fall, dass q, r und s = 0 und t >0). Es finden sich darin jedoch keine Hinweise auf Herstellung und Einsatz dieser Polymere. Allerdings besitzen sie aufgrund des einschränkenden Kriteriums der Viskosität einer toluolischen 30%igen Lösung von mindestens 100 mPas bei 25°C eine hohe Molmasse. In Kombination mit der Maßgabe, dass ein reines TM-Polysiloxan eine Kettenlänge von maximal 17 (t ≤ 15 in allgemeiner Formel (2)) haben darf, sind die erfindungsgemäßen Polymere ausgeschlossen. Außerdem enthalten die beschriebenen Polysiloxane B-1 keine SiH-Reste.

In WO 01/27187 **(University of Southern California, 2000)** wird ein Verfahren zur Herstellung von verzweigten Polysiloxanen ähnlich zu denen der allgemeinen Formel (1) durch anionische oder kationische Ringöffnungspolymerisation von aufwändig herzustellenden monosilylsubstituierten Cyclotrisiloxanen beansprucht. Mit dieser Methode sind jedoch keine vollständig silylsubstituierten linearen T-Polymere zugänglich, da nur jede dritte Siloxaneinheit der Kette trifunktionell ist.
Guo Ping Cai und William P. Weber beschreiben dagegen in Macromolecules 2000, 33, 6310-14 einen Zugang zu Polysiloxanen mit einem Rückgrat aus T-Einheiten, die ebenfalls durch anionische Ringöffnungspolymerisation aus dem entsprechenden T₃M₃-Cyclus zugänglich sind. Nachteilig an diesem Verfahren ist neben der aufwändigen Herstellung des T-Cyclus sowie dem technisch nur schwer umsetzbaren Prozess der anionischen Polymerisation die Unverträglichkeit der Methode mit SiH-Verbindungen. Außerdem sind damit nur Reaktionsprodukte zugänglich, die das anionische Startermolekül in Form einer Diphenylsiloxy-Einheit enthalten (s. Fig.1, S.6311). Beim Einsatz solcher Polysiloxane in üblichen Methyl-Siliconmischungen, kann dies zu unerwünschter Unverträglichkeit und Entmischung führen.

In DE 102014212698 OS wurde gezeigt, dass die Reaktion von Kaliumsalzen von Organosilanolen mit Monochlororganosilanen zu überwiegend cyclischen Siloxan-Strukturen führen (s. Beispiele 1 - 6).

In US 2567110 ist die Umsetzung eines Natriummethylsiliconats mit Trimethylchlorsilan beschrieben (Ex. 1, Spalte 6).

Lediglich cyclische Strukturen sind aus der in Spalte 2, Zeile 32 formulierten theoretischen mittleren Siliconatsalzstruktur für ein Metall : Si-Verhältnis von 1:1 abzuleiten. Für Metall : Si-Verhältnisse < 1 sind überhaupt keine Strukturen für Reaktionsprodukte mit Chlorsilanen formuliert. SiH-Einheiten sowie Si-Einheiten mit ungesättigten aliphatischen Resten kommen nicht vor.

Das Dokument DE 10 2014 212698 offenbart ein Verfahren, dass dem vorliegenden Verfahren ähnlich ist. Das vorliegende Verfahren unterscheidet sich jedoch dadurch, dass mindestens zwei Reste pro Molekul aus Wasserstoff und einem aliphatisch ungesättigten organischen Rest ausgewählt werden. Gegenstand der Erfindung ist ein Verfahren zur Herstellung von linearen Siloxanen der allgemeinen Formel (1)

R¹R²R³SiO-[R-Si(OSiR⁴R⁵R⁶)O]ₙ-SiR¹R²R³ (1)

durch Umsetzung von Lithium- oder Natriumsalzen von Organosilanolen bestehend aus Einheiten der allgemeinen Formel (2)

R-Si(OH)₃₋ₘ(OM)ₘ (2)

von deren Kondensationsprodukten, oder von Lithium- oder Natriumsalzen von Silanolen der allgemeinen Formel (2) zusammen mit deren Kondensationsprodukten, bei denen das Molverhältnis von Lithium zu Silicium bzw. Natrium zu Silicium ≤ 1,5 beträgt, mit Halogensilanen der allgemeinen Formel (3)

R⁷R⁸R⁹Si-Hal (3)

wobei
- **m**: für eine Zahl ≤ 1,5
- **n**: für eine Zahl von 3 bis 100
- **R**: für einen organischen über Kohlenstoff gebundenen Rest,
- **M**: für das Lithium-Kation oder das Natrium-Kation,
- **Hal**: für einen Halogenrest und
- **R¹, R², R³, R⁴, R⁵, R⁶, R⁷, R⁸** und **R⁹**: unabhängig voneinander für einen Wasserstoffrest oder einen organischen über Kohlenstoff oder Sauerstoff gebundenen Rest stehen,
mit der Maßgabe, dass mindestens zwei Reste pro Molekül der allgemeinen Formel (1) ausgewählt werden aus Wasserstoff und einem aliphatisch ungesättigten organischen Rest.

Gegenstand der Erfindung sind auch lineare Siloxane der allgemeinen Formel (1)

R¹R²R³SiO-[R-Si(OSiR⁴R⁵R⁶)O]ₙ-SiR¹R²R³ (1)

wobei
- **n**: für eine Zahl von 3 bis 100
- **R**: für einen organischen über Kohlenstoff gebundenen Rest,
- **R¹, R², R³, R⁴, R⁵** und **R⁶**: unabhängig voneinander für einen Wasserstoffrest oder einen organischen über Kohlenstoff oder Sauerstoff gebundenen Rest stehen,
mit der Maßgabe, dass mindestens zwei Reste pro Molekül der allgemeinen Formel (1) ausgewählt werden aus Wasserstoff und einem aliphatisch ungesättigten organischen Rest und dass, wenn keiner der Reste **R¹, R², R³** Wasserstoff oder aliphatisch ungesättigten organischen Rest bedeutet, auch mindestens eine Einheit (OSiR⁴R⁵R⁶) vorhanden ist, in der die Reste **R⁴, R⁵, R⁶** weder Wasserstoff noch aliphatisch ungesättigten organischen Rest bedeuten.

Überraschend wurde gefunden, dass sowohl Lithium- oder Natriumsalze von Organosilanolen (sogenannte Lithium- bzw. Natrium-Siliconate) der allgemeinen Formel (2) oder deren Kondensationsprodukte bei der Umsetzung mit Halogensilanen der allgemeinen Formel (3) im Gegensatz zu den entsprechenden Kaliumsalzen lineare Siloxane der allgemeinen Formel (1) liefern.

Das Verfahren basiert auf einfach zugänglichen Rohstoffen, ist leicht - auch technisch - umsetzbar und besitzt eine sehr hohe Selektivität. Die Nachteile des aktuellen Standes der Technik können damit überwunden werden. So sind auf einfachem Weg z.B. Polysiloxane mit hochreaktiven seitenständigen H-SiR⁴R⁵O_{1/2}-(M^{H})Gruppen zugänglich.

Die im Verfahren eingesetzten Lithium- und/oder Natriumsalze von Silanolen bestehend aus Einheiten der allgemeinen Formel (2) und deren Kondensationsprodukte werden nachstehend zusammengefasst als Siliconate **A** bezeichnet.

Die linearen Siloxane der allgemeinen Formel (1) können bevorzugt als Vernetzer z.B. für optische und elektronische Anwendungen, als Ausgangsmaterialien für funktionelle Fluide, z.B. oberflächenaktive Verbindungen und als potenzielle Bausteine für Siloxan-Harze verwendet werden.

Der Rest **R** steht dabei bevorzugt für einen einwertigen Si-C gebundenen unsubstituierten oder durch Halogenatome, C₁₋₆-Alkyl, C₁₋₆-Aryl- oder C₁₋₆-Alkoxy- oder Silylgruppen substituierten Kohlenwasserstoffrest mit 1 bis 30 Kohlenstoffatomen, in dem eine oder mehrere, einander nicht benachbarte -CH₂-Einheiten durch Gruppen -O-, oder -S- ersetzt sein können und keine direkte SiC-Bindung zu einem aromatischen Kohlenstoffrest besteht. Der Rest **R** kann linear, verzweigt, zyklisch, gesättigt oder ungesättigt sein.

**R** steht besonders bevorzugt für einen einwertigen unsubstituierten oder durch Halogenatome, Alkoxy- oder Silylgruppen substituierten Kohlenwasserstoffrest mit 1 bis 18 Kohlenstoffatomen bei dem keine direkte SiC-Bindung zu einem aromatischen Kohlenstoffrest besteht. Besonders bevorzugt sind unsubstituierte Alkylreste, Cycloalkylreste, Alkenylreste sowie Alkylarylreste. Vorzugsweise weist der Kohlenwasserstoffrest **R** 1 bis 8 Kohlenstoffatome auf. Besonders bevorzugt sind der Methyl-, Ethyl-, Propyl-, 3,3,3-Trifluorpropyl-, Isobutyl- (=2-Methylprop-1-yl-), Vinyl-, n-Hexyl-, 1-Phenylethyl-, 2-Phenylethyl-, der 4-Vinyl-1-phenyl- und der Isooctylrest (z.B. 2,4,4-Trimethylpent-1-ylrest), ganz besonders der Methylrest und der Vinylrest, insbesondere der Methylrest. Es können auch Mischungen verschiedener Reste **R** im Siliconat **A** der allgemeinen Formel (2) vorliegen.

Weitere Beispiele für Reste **R** sind:
n-Propyl-, 2-Propyl-, Chlormethyl-, Methoxymethyl-, 3-Chlorpropyl-, 2-(Trimethylsilyl)ethyl-, n-Butyl-, 2-Butyl-, t-Butyl-, n-Pentyl-, Cyclopentyl-, Cyclohexyl-, n-Heptyl-, n-Octyl-, 2-Ethylhexyl-, n-Nonyl-, n-Decyl-, n-Undecyl-, 10-Undecen-1-yl-, n-Dodecyl-, Isotridecyl-, n-Tetradecyl-, n-Hexadecyl-, Allyl-, 3-Phenylpropylrest. Weitere Beispiele für **R** sind Reste -(CH₂O)ₒ-R¹⁰, -(CH₂CH₂O)ₚ-R¹¹, und CH₂CH(CH₃)O)_{q}-R¹² wobei **o, p** und **q** Werte von 1 bis 10, insbesondere 1, 2, 3 bedeuten. **R¹⁰, R¹¹** und **R¹²** bedeuten vorzugsweise einen unsubstituierten oder durch Halogenatome substituierten Alkylrest mit 1 bis 6 Kohlenstoffatomen. Beispiele für Reste **R¹⁰, R¹¹** und **R¹²** sind der Methyl-, der Ethyl, der Propyl-, der Allyl- und der Butylrest, wobei der Methylrest besonders bevorzugt ist.

Das Molverhältnis M:Si in der allgemeinen Formel (2) dargestellt durch den Index **m** ist vorzugsweise mindestens 0,1, besonders bevorzugt mindestens 0,4 insbesondere mindestens 0,5 und höchstens 1,2 bevorzugt höchstens 1,1, insbesondere 1,0. Wobei auch Mischungen aus Natrium- und Lithium-Kationen sowie in Anteilen von maximal 10 mol-% auch andere Metall-Kationen vorkommen können.

Die Herstellung der erfindungsgemäßen Siliconate erfolgt vorzugsweise nach den in WO2013/041385**,** WO2012/022544**,** WO2013/075969 und besonders bevorzugt nach dem in DE 102014205258 und 102014209583 beschriebenen Verfahren. Da das Herstellungsverfahren des Siliconats einen Einfluss auf die Zusammensetzung des erfindungsgemäßen Zielproduktes der allgemeinen Formel (1) haben kann, ist in Vorversuchen das jeweils optimale Siliconat zu ermitteln.

Aus den Resten **R⁷, R⁸** und **R⁹** in den Halogensilanen der allgemeinen Formel (3) werden die Reste **R¹, R², R³, R⁴, R⁵** und **R⁶** in den linearen Siloxanen der allgemeinen Formel (1) gebildet.

Die Reste **R¹** bis **R⁹** stehen bevorzugt für den Wasserstoff-, einen C₁₋₁₀-Alkoxy-, einen C₆₋₂₀-Aryloxy- oder einen einwertigen unsubstituierten oder durch Halogenatome, Alkoxy- oder Silylgruppen substituierten Kohlenwasserstoffrest mit 1 bis 18 Kohlenstoffatomen. Besonders bevorzugt sind Wasserstoff-, C₁₋₆-Alkoxy-, C₆₋₁₀-Aryloxy- sowie unsubstituierte C₁₋₁₀-Alkylreste, C₃₋₈-Cycloalkylreste, C₇₋₂₁-Alkylarylreste, C₇₋₂₁-Arylalkylreste und Phenylreste. Ganz besonders bevorzugt sind der Wasserstoff-, Methyl-, Ethyl-, n-Propyl-, 3-Chlorpropyl-, 3,3,3-Trifluorpropyl-, Vinyl-, n-Hexyl- und der Phenylrest, ganz besonders Wasserstoff, der Methylrest und der Vinylrest.

Weitere Beispiele für Reste **R¹** bis **R⁹** sind: 2-Propyl-, Chlormethyl-, Methoxymethyl-, 2-(Trimethylsilyl)ethyl-, 2-(Trimethoxysilyl)-ethyl-, 2-(Triethoxysilyl)-ethyl-, 2-(Dimethoxymethylsilyl)-ethyl-, 2-(Diethoxymethylsilyl)-ethyl-, n-Butyl-, 2-Butyl-, 2-Methylpropyl-, t-Butyl-, n-Pentyl-, Cyclopentyl-, n-Hexyl-, Cyclohexyl-, n-Heptyl-, n-Octyl-, 2-Ethylhexyl-, n-Nonyl-, n-Decyl-, n-Undecyl-, 10-Undecenyl-, n-Dodecyl-, Isotridecyl-, n-Tetradecyl-, n-Hexadecyl-, Ethinyl-, Allyl-, Benzyl-, p-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, 1-Phenylethyl-, 3-Phenylpropylrest.

In einer bevorzugten Ausführungsform sind mindestens zwei Reste, besonders bevorzugt mindestens drei Reste pro Molekül der allgemeinen Formel (1) aliphatisch ungesättigte organische Reste und kein Rest bedeutet Wasserstoff. Bevorzugt sind Alkenylreste, insbesondere Vinyl- und Allylreste.

In einer weiteren bevorzugten Ausführungsform sind mindestens zwei Reste, besonders bevorzugt mindestens drei Reste pro Molekül der allgemeinen Formel (1) Wasserstoff und kein Rest bedeutet aliphatisch ungesättigte organische Reste.

In einer weiteren bevorzugten Ausführungsform sind mindestens ein Rest, besonders bevorzugt mindestens zwei Reste pro Molekül der allgemeinen Formel (1) aliphatisch ungesättigte organische Reste und mindestens ein Rest, besonders bevorzugt mindestens zwei Reste pro Molekül Wasserstoff. Bevorzugte aliphatisch ungesättigte organische Reste sind Alkenylreste, insbesondere Vinyl- und Allylreste.

Vorzugsweise handelt es sich bei den Halogensilanen der allgemeinen Formel (3) um Chlorsilane.

Beispiele für Chlorsilane der allgemeinen Formel (3) sind H₃SiCl, Me₃SiCl, HSiMe₂Cl, ViSiMe₂Cl, PhSiMe₂Cl, PhViMeSiCl, Allyl-SiMe₂Cl, F₃C-CH₂CH₂-SiMe₂Cl, (EtO)₃SiCl, (MeO)₃SiCl, (EtO)₂SiMeCl, (MeO)₂SiMeCl, EtOSiMe₂Cl, MeOSiMe₂Cl, Cl-CH₂-SiMe₂Cl, Cl-(CH₂)₃-SiMe₂Cl.

Besonders bevorzugt sind Me₃SiCl, HSiMe₂Cl, ViSiMe₂Cl, PhSiMe₂Cl, Cl-CH₂-SiMe₂Cl und Allyl-SiMe₂Cl, insbesondere Me₃SiCl, HSiMe₂Cl und ViSiMe₂Cl. Herstellungsbedingt können insbesondere in den technischen Qualitäten Verunreinigungen durch Organodi- und -trihalogensilane vorliegen. Ihr Anteil übersteigt aber vorzugsweise nicht 10 mol-%.

Wobei Me- für den Methyl, Ph- für den Phenyl-, Allyl- für den 2-Propen-1-yl, Vi- für den Vinyl- und Cl- für den Chlorrest stehen.

Die Halogensilane werden bei der Methylchlorsilansynthese vorzugsweise nach dem Müller-Rochow-Prozess hergestellt, oder können als Folgeprodukte durch chemische Reaktionen nach bekannten Verfahren hergestellt werden (z.B. Hydrosilylierung, nucleophile Substitution, radikalische Substitution) und sind zumeist kommerziell erhältlich.

Die Verbindungen der allgemeinen Formel (1) werden nach dem erfindungsgemäßen Verfahren durch Umsetzung von einem oder mehreren Siliconaten **A** mit einem oder mehreren Halogensilanen der allgemeinen Formel (3) erhalten. Dies kann durch Zugabe des Siliconat **A** zum Halogensilan oder umgekehrt durch Zugabe des Halogensilans zum Siliconat **A** erfolgen. Dabei liegt vorteilhafterweise zumindest eine Komponente in flüssiger Form z.B. suspendiert oder gelöst vor. Die meisten Halogensilane sind bei Raumtemperatur unter Normaldruck flüssig, die Siliconate **A** fest. Es bietet sich deshalb an, die Siliconate **A** in einem inerten Lösungsmittel zu lösen oder aufzuschlämmen und die flüssigen Halogensilane pur oder gelöst in einem inerten Lösungsmittel zu dosieren, um eine möglichst rasche Reaktion aufgrund der guten Durchmischung zu gewährleisten. Als Lösungsmittel kommen vorzugsweise aprotische polare und unpolare organische Lösungsmittel zum Einsatz, beispielsweise lineare, verzweigte oder cyclische Alkane wie n-Pentan, n-Hexan, n-Heptan, n-Octan, Isohexan, Isooctan, Cyclohexan, Aromaten wie Benzol, Toluol, o-Xylol, m-Xylol, p-Xylol, Ether wie Diethylether, Di-n-propylether, Di-n-butylether, Methyl-t-butylether, Phenylmethylether, Diphenylether, Tetrahydrofuran, 2-Methyltetrahydrofuran, Dioxan, Tetrahydropyran, 4-Methyltetrahydropyran, Ethylenglykoldimethylether, Diethylenglykoldimethylether, Triethylenglykoldimethylether, Ethylenglykoldibutylether, Polyethylenglykole oder Polypropylenglykole oder Polybutylenglykole oder Glykolcopolymere unterschiedlicher Molmassen/Polymerisationsgrade oder Siloxane, wie Hexamethyldisiloxan, Octamethyltrisiloxan, Octamethylcyclotetrasiloxan, Decamethylcyclopentasiloxan, Methyl-tris-trimethylsiloxysilan oder Gemische verschiedener Lösungsmittel.

Zum Abfangen des bei der Reaktion gebildeten Halogenwasserstoffs kann eine Hilfsbase zugesetzt werden. Als Hilfsbase können basische Salze oder stickstoffhaltige Verbindungen wie Amine, Harnstoffe, Imine, Guanidine, Amide eingesetzt werden. Beispiele für basische Salze sind Natriumhydrid, Natriumamid, Natriumcarbonat, Natriumhydrogencarbonat, Kaliumcarbonat, Kaliumhydrogencarbonat, Calciumcarbonat, Calciumhydrogencarbonat, Calciumoxid, Magnesiumcarbonat, Magnesiumoxid. Beispiele für stickstoffhaltige Verbindungen sind Ammoniak, Ethylamin, Butylamin, Trimethylamin, Triethylamin, Tributylamin, N,N-Dimethyldecylamin, Triisooctylamin, Harnstoff, Tetramethylharnstoff, Guanidin, Tetramethylguanidin, N-Methylimidazol, N-Ethylimidazol, Piperidin, Pyridin, Picolin, N-Methylmorpholin. Vorzugsweise kommen Stickstoffverbindungen zum Einsatz, bei denen die Stickstoffatome keinen Wasserstoff tragen.

Vorzugsweise wird die Hilfsbase mindestens äquimolar bezüglich des Halogensilans eingesetzt. Pro Mol-Äquivalent Halogensilan werden vorzugsweise mindestens 0,5, besonders bevorzugt mindestens 1,0, insbesondere mindestens 2,0 Basenäquivalente Hilfsbase eingesetzt. Es können auch größere Zusatzmengen Hilfsbase eingesetzt werden - z.B. wenn diese gleichzeitig als Lösungsmittel dienen soll. Meist bringt dies jedoch keinen Vorteil, sondern verringert die Raum-Zeit-Ausbeute und damit die Wirtschaftlichkeit des Verfahrens. Bevorzugt wird die Hilfsbase mit dem Siliconat **A** vorgelegt und das Halogensilan der allgemeinen Formel (3) zudosiert. Es können aber auch beide Edukte parallel zur Hilfsbase dosiert werden, wobei die Hilfsbase vorgelegt wird. Es können auch Gemische verschiedener Hilfsbasen eingesetzt werden.

In einer Ausführungsform des erfindungsgemäßen Verfahrens wird das Siliconat **A** mit dem Halogensilan der allgemeinen Formel (3) ohne Hilfsbase und ohne Lösungsmittel direkt umgesetzt. Sofern das Siliconat **A** freie SiOH-Gruppen enthält, die bei der Reaktion des Halogensilans der allgemeinen Formel (3) gasförmigen Halogenwasserstoff entwickeln, kann dieser problemlos in die Produktionsprozesse beispielsweise in einen Chlorwasserstoffverbund zurückgeführt und damit kostengünstig recycliert werden. Wenn keine Hilfsbase zugegen ist, wird das Siliconat **A** gegebenenfalls dispergiert in einem inerten Lösungsmittel vorzugsweise zu dem Halogensilan dosiert. Vorzugsweise wird dabei das gebildete Halogenwasserstoffgas durch einen Inertgasstrom ausgeschleppt oder mittels reduziertem Druck aus der Reaktionsmischung sofort nach der Entstehung entfernt, um unerwünschte Nebenreaktionen zwischen dem Siliconat **A** und dem Halogenwasserstoff zu vermeiden.

Vorzugsweise wird das Halogensilan der allgemeinen Formel (3) mindestens äquimolar bezüglich des Siliconats **A** eingesetzt. Pro Mol-Äquivalent Siliconat-Silicium werden vorzugsweise mindestens 0,8, besonders bevorzugt mindestens 1,0, insbesondere mindestens 1,5 Mol-Äquivalente Halogensilan der allgemeinen Formel (3) eingesetzt.
Vorzugsweise werden pro Mol-Äquivalent Siliconat **A** höchstens 30 Mol-Äquivalente, besonders bevorzugt 10 Mol-Äquivalente, insbesondere höchstens 6 Mol-Äquivalente Halogensilan eingesetzt.

Es können auch Mischungen verschiedener Halogensilane der allgemeinen Formel (3) eingesetzt werden.
Dadurch sind Siloxane der allgemeinen Formel (1) mit unterschiedlichen Einheiten SiR¹R²R³ und SiR⁴R⁵R⁶ zugänglich. Besonders bevorzugt sind Mischungen aus Trimethylchlorsilan und Dimethylchlorsilan oder Dimethylvinylchlorsilan, weil sich über das Mischungsverhältnis der SiH- bzw. Si-Vinyl-Gehalt im Endprodukt sehr genau einstellen lässt. Es ist möglich, das Siliconat **A** sukzessive zuerst mit einem unterstöchiometrischen Anteil eines Halogensilans der allgemeinen Formel (3) und danach mit einem zweiten Halogensilan der allgemeinen Formel (3) umzusetzen. Im Mittel enthalten die erfindungsgemäßen Siloxane der allgemeinen Formel (1) mindestens 2 additionsvernetzbare Einheiten. Dies bedeutet statistisch entweder mindestens 2 Si-gebundene Wasserstoffreste oder mindestens 2 aliphatisch ungesättigte, vorzugsweise VinylReste, oder mindestens einen Si-gebundenen Wasserstoffrest und mindestens einen aliphathisch ungesättigten, vorzugsweise Vinyl-Rest. Während die aliphatisch ungesättigten Reste sowohl über das Siliconat **A** der allgemeinen Formel (2) als auch über das Halogensilan der allgemeinen Formel (3) eingeführt werden können, ist die Einführung Si-gebundener Wasserstoffreste nur über das Halogensilan der allgemeinen Formel (3) möglich.

Die Umsetzung des Siliconats **A** mit dem Halogensilan der allgemeinen Formel (3) wird vorzugsweise bei einer Temperatur von mindestens -20°C, besonders bevorzugt von mindestens 0°C, insbesondere mindestens 10°C durchgeführt. Die maximal erreichbare Temperatur ergibt sich darüber hinaus aus dem Siedepunkt der niedrigstsiedenden Komponente.
Um Zersetzung des Siliconats **A** zu vermeiden übersteigt die Reaktionstemperatur 200°C vorzugsweise nicht, besonders bevorzugt liegen die Reaktionstemperaturen bei maximal 120°C insbesondere bei maximal 70°C.
Dabei kann die Reaktionsmischung sowohl gekühlt als auch geheizt werden, es können auch einzelne Komponenten auf eine bestimmte Temperatur gebracht werden, bevor sie miteinander in Kontakt kommen, z.B. um die Reaktionswärme nutzen zu können. Das Verfahren kann sowohl batchweise z.B. in einem Rührwerk als auch kontinuierlich z.B. in einem Schleifen- oder Rohrreaktor oder einem Wirbelbettreaktor oder einem Schaufeltrockner durchgeführt werden. Sofern das Siliconat **A** als Feststoff oder Suspension dosiert wird, kann dies über eine Feststoffschleuse (z.B. Förderschnecke oder Zellradschleuse) erfolgen.

Bei der Umsetzung des Siliconats **A** mit dem Halogensilan der allgemeinen Formel (3) können in sehr geringem Umfang als Nebenprodukte niedermolekulare lineare und/oder cyclische Siloxane entstehen. In den meisten Fällen kann auf die Entfernung dieser Nebenprodukte verzichtet werden. Falls notwendig können diese niedermolekularen Siloxane destillativ z.B. durch Ausheizen bei vermindertem Druck an einer Kurzwegdestillation einfach entfernt werden.
Die aus dem Siliconat und aus der gegebenenfalls eingesetzten Hilfsbase bei der Umsetzung gebildeten Halogenid-Salze können abfiltriert, abdekantiert, abzentrifugiert oder in Wasser gelöst und als wässrige Lösung abgetrennt werden. Für die wässrige Aufarbeitung kann zusätzlich ein Lösungsmittel zugesetzt werden, dessen Löslichkeit in Wasser möglichst gering ist, insbesondere maximal 5 Gew.-% bei 25°C. Vorzugsweise wird ein gegebenenfalls vorhandener Überschuss Halogensilan der allgemeinen Formel (3) vor der wässrigen Aufarbeitung abdestilliert. Die wässrige Aufarbeitung vor der Abtrennung des erfindungsgemäßen Siloxans der allgemeinen Formel (1) ist jedoch dann ungünstig, wenn das Siloxan der allgemeinen Formel (1) besonders feuchtigkeitsempfindliche Reste trägt, z.B. Alkoxyreste, oder eine hohe Wasserlöslichkeit aufweist. In diesem Fall ist die Abtrennung der Lithium- oder Natriumsalze durch Filtration, Dekantieren oder Zentrifugieren und anschließende destillative Abtrennung des Überschusses an Chlorsilan vorzuziehen.

Aufgrund der Hydrolyseempfindlichkeit der Halogensilane wird die Umsetzung des Siliconats **A** mit Halogensilan der allgemeinen Formel (3) vorzugsweise unter Feuchtigkeitssauschluss, d.h. in einer getrockneten Atmosphäre oder unter reduziertem Druck, besonders bevorzugt unter Inertgas, wie Stickstoff, CO₂, Argon, Magerluft, bevorzugt bei 900 bis 1100 hPa durchgeführt.

Die Zusammensetzung der erfindungsgemäßen Polysiloxane kann sehr gut mit Hilfe der ²⁹Si-NMR-Spektroskopie aufgeklärt werden. Über das Integrationsverhältnis von TM₂-Endgruppen zu TM-Einheiten der Kette lassen sich die mittleren Kettenlängen und damit die mittleren Molmassen leicht bestimmen. Die mittlere Kettenlänge lässt sich z.B. durch das Verfahren der Siliconatherstellung steuern, beispielsweise durch die Reihenfolge/Art der Dosierung, die Wahl des Lösungsmittels oder den Verdünnungsgrad der Lauge. Weitere Möglichkeiten bieten die Wahl des Lösungsmittels sowie der Verdünnungsgrad bei der Umsetzung mit Chlorsilan, die Wahl der Hilfsbase und das Molverhältnis Base : Chlorsilan.

Der Index **n** in der allgemeinen Formel (1) beträgt vorzugsweise mindestens 5, besonders bevorzugt mindestens 10, insbesondere mindestens 30, er beträgt vorzugsweise maximal 90, besonders bevorzugt maximal 70, insbesondere höchstens 60.

Vorzugsweise werden mindestens 3 Reste, besonders bevorzugt mindestens 5 Reste pro Molekül der allgemeinen Formel (1) ausgewählt aus Wasserstoff und einem aliphatisch ungesättigten organischen Rest.

Wenn keiner der Reste **R¹, R², R³** Wasserstoff oder aliphatisch ungesättigten organischen Rest bedeutet, sind vorzugsweise auch mindestens 2, besonders bevorzugt mindestens 3 Einheiten (OSiR⁴R⁵R⁶) vorhanden, in denen die Reste **R⁴, R⁵, R⁶** weder Wasserstoff noch aliphatisch ungesättigten organischen Rest bedeuten.

Bevorzugt werden nach dem erfindungsgemäßen Verfahren folgende Siloxane der allgemeinen Formel (1) hergestellt:

ViMe₂SiO-[SiVi(OSiMe₂Vi]O]₄₇-SiMe₂Vi

Me₃SiO-[SiVi(OSiMe₃)O]₃₇-SiMe₃

ViMe₂SiO-[SiMe(OSiMe₂Vi)O]₃₇-SiMe₂Vi

HMe₂SiO-[SiMe(OSiMe₂H)O]₄₇-SiMe₂H

HMe₂SiO-[SiMe(OSiMe₂H)O]₃₃-SiMe₂H

HMe₂SiO-[SiVi(OSiMe₂H)O]₃₂-SiMe₂H

HMe₂SiO-[Si-iOct(OSiMe₂H)O]₃-[SiMe(OSiMe₂H)O]₃₄-SiMe₂H

HMe₂SiO-[ViSi(OSiMe₂H)O]₅-[SiMe(OSiMe₂H)O]₃₈-SiMe₂H

ViMe₂SiO-[ViSi(OSiMe₂Vi)O]₈-[SiMe(OSiMe₂Vi)O]₃₄-SiMe₂Vi

Bei folgenden Mischsystemen, hergestellt aus zwei verschiedenen Chlorsilanen und gegebenenfalls einem gemischten Siliconat ist jeweils das mittlere Verhältnis aus M- und T-Einheiten angegeben, da eine Zuordnung von M zu T nicht mehr eindeutig getroffen werden kann:

[MeSiO_{3/2}]₄₅[HMe₂SiO_{1/2}]₅[Me₃SiO_{1/2}]₃₂

[MeSiO_{3/2}]₄₇[HMe₂SiO_{1/2}]₅[ViMe₂SiO_{1/2}]₃[Me₃SiO_{1/2}]₄₁

[ViSiO_{3/2}]₃₁[HMe₂SiO_{1/2}]₆[ViMe₂SiO_{1/2}]₈[Me₃SiO_{1/2}]₁₉

[MeSiO_{3/2}]₃₂[ViSiO_{3/2}]₃[HMe₂SiO_{1/2}]₅[Me₃SiO_{1/2}]₃₂

[MeSiO_{3/2}]₂₁[ViSiO_{3/2}]₂₀[HMe₂SiO_{1/2}]₆[ViMe₂SiO_{1/2}]₃[Me₃SiO_{1/2}]₃₄

[MeSiO_{3/2}]₃₈[iOctSiO_{3/2}]₆[HMe₂SiO_{1/2}]₆[ViMe₂SiO_{1/2}]₄[Me₃SiO_{1/2}]₃₆

[MeSiO_{3/2}]₃₂[TFPSiO_{3/2}]₁₆[HMe₂SiO_{1/2}]₈[Me₃SiO_{1/2}]₄₂

[MeSiO_{3/2}]₆₂[iOctSiO_{3/2}]₃₆[ViMe₂SiO_{1/2}]₄[Me₃SiO_{1/2}]₉₆

[MeSiO_{3/2}]₃₂[PhViMeSiO_{1/2}]₃[Me₃SiO_{1/2}]₃₁

wobei der Index ein statistisches Mittel angibt, Me für den Methyl-, Vi für den Vinyl-, iOct für den Isooctyl-, TFP für den 3,3,3-Trifluorpropyl-, Ph für den Phenyl-Rest steht und bei mehreren verschiedenen M- bzw. T-Einheiten im Polysiloxan diese statistisch verteilt vorliegen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 1000 hPa (abs.) durchgeführt.

Der **Festgehalt** wird jeweils mit der Festgehaltswaage HR73 Halogen Moisture Analyzer von Mettler Toledo bei 160°C bestimmt.

Das **MALDI-TOF-Massenspektrum** der Reaktionsprodukte aus jeweiligem Lithium- oder Natriumsiliconat und Chlorsilan wird mit dem Massenspektrometer *Shimadzu Axima Performance* im Reflektron Modus aufgenommen. Dazu wird die Probe in THF gelöst (10 mg/mL), diese dann mit der Matrix *trans*-2-[3-(4-*tert-*Butylphenyl)-2-methyl-2-propenyliden]malononitril in THF (10 mg/mL) und dem Kationisierungsreagenz in THF (100 mmol/L) vermischt. Als Kationisierungsreagenz wird LiTFA (= Lithiumtrifluoracetat) und CsI verwendet. Mit CsI wird zudem intern kalibriert, wodurch eine Massenabweichung von nur 5 ppm erreicht wird. Im Fall der externen Kalibrierung (bei LiTFA) sind Massenabweichungen bis 20 ppm möglich. Von der Mischung wird 1 µL auf ein Edelstahltarget aufgetragen, luftgetrocknet und vermessen. Dabei sind die homologen Reihen linearer M-[T-M]ₓ-M-Siloxane eindeutig nachzuweisen.

Die ²⁹Si-NMR-Spektren der Siloxane und der Siloxanole werden mit einem *Bruker Avance DPX 300* Spektrometer bei jeweils 59.63 MHz mit einem 10 mm *QNP*-Probenkopf aufgenommen. Als Lösungsmittel wird C₆D₆ verwendet. Die chemische Verschiebung bezieht sich auf Tetramethylsilan. Folgende Signal/Struktur-Zuordnungen werden angenommen:
[Me₃SiO]₂-SiMeO_{1/2}: 7,70 ppm (M-T am Kettenende, M₂T-Gruppe)
[Me₃SiO]₂-SiMeO_{1/2}: -65,67 ppm (M-T am Kettenende, M₂T-Gruppe)
Me₃SiO-SiMe[OSiMeO_{2/2}]₂: 8,09 ppm (M-T in der Kette)
Me₃SiO-SiMe[OSiMeO_{2/2}]₂: -67,16 ppm (M-T in der Kette)
[HMe₂SiO]₂-SiMeO_{1/2}: -6,20 ppm (^{H}M-T am Kettenende, ^{H}M₂T-Gruppe)
[HMe₂SiO]₂-SiMeO_{1/2}: -64,13 ppm (^{H}M-T am Kettenende, ^{H}M₂T-Gruppe)
HMe₂SiO-SiMe[OSiMeO_{2/2}]₂: -6,08 ppm (^{H}M-T in der Kette)
HMe₂SiO-SiMe[OSiMeO_{2/2}]₂: -66,15 ppm (^{H}M-T in der Kette)
[ViMe₂SiO]₂-SiMeO_{1/2}: -3,92 ppm (^{Vi}M-T am Kettenende, ^{Vi}M₂T-Gruppe)
[ViMe₂SiO]₂-SiMeO_{1/2}: -65,9 ppm (^{Vi}M-T am Kettenende, ^{Vi}M₂T-Gruppe)
ViMe₂SiO-SiMe[OSiMeO_{2/2}]₂: -3,5 ppm (^{Vi}M-T in der Kette -
überlagert mit 1,1,3,3-Tetramethyl-1,3-divinyldisiloxan)
ViMe₂SiO-SiMe[OSiMeO_{2/2}]₂: -67,4 ppm (^{Vi}M-T in der Kette)

### Beispiel 1

### a) Herstellung Natriummethyl-Siliconat-Pulver

### (Na:Si=0,5:1)

Es wird analog Herstellungsbeispiel 1 in WO2012/022544 (PCT/EP2011/061766) ein Siliconat-Pulver durch Umsetzung von 70 g Methyltrimethoxysilan (>98%, WACKER CHEMIE AG) in 123 g Isopar® E (isoparaffines Kohlenwasserstoffgemisch mit einem Siedebereich von 113 - 143°C, käuflich erhältlich bei ExxonMobil) und einer Mischung aus 22,5 g 45%iger Natronlauge und 19,5 g vollentsalztem Wasser und anschließender azeotroper Trocknung hergestellt. Nach Abdestillation der flüchtigen Bestandteile bis 120°C, 3hPa verbleiben 41,3 g eines feinkörnigen weißen Pulvers mit einem Festgehalt von 99,7%. Der mittels ICP-OES ermittelte Natriumgehalt beträgt 12,4 Gew.-%.

### b) Umsetzung des Siliconats aus Beispiel 1 a) mit Trimethylchlorsilan/Dimethylchlorsilan-Gemisch (9:1)

1 g des in Bsp. 1 a) erhaltenen Siliconatpulvers wird in einer Mischung aus 11,2 g Isopar® E und 4 g Pyridin (Merck KGaA, >99,5%) bei 23°C vorgelegt. Zu dieser Suspension wird eine Mischung aus 3,6 g Trimethylchlorsilan (techn. Qualität, >99%, WACKER CHEMIE AG) und 0,35 g Dimethylchlorsilan (techn. Qualität, >98%, WACKER CHEMIE AG) tropfenweise zudosiert. Die weiße Suspension lässt man 20 Stunden bei Raumtemperatur (ca. 23°C) rühren, bevor 7 g demineralisiertes Wasser zugesetzt werden. Nach 30 Minuten wird das Gemisch filtriert und von der oberen, organischen Phase des Filtrats ein ²⁹SiNMR-Spektrum aufgenommen. Neben den Signalen für Trimethylsilanol, Hexamethyldisiloxan und 1,1,3,3-Tetramethyldisiloxan findet man Signale für die M₂T-Endgruppen und MT-Kettenfragmente in einem Molverhältnis von 1 : 16. Das Molverhältnis ^{H}M:M- Einheiten entspricht dem der eingesetzten Chlorsilane.

### Beispiel 2

### a) Herstellung Natriummethyl-Siliconat-Pulver (Na:Si=0,65:1)

Es wird analog Herstellungsbeispiel 1 in WO2012/022544 (PCT/EP2011/061766) ein Siliconat-Pulver durch Umsetzung von 70 g Methyltrimethoxysilan in 123 g Isopar® E und einer Mischung aus 29,3 g 45%iger Natronlauge und 15,8 g vollentsalztem Wasser und anschließender azeotroper Trocknung hergestellt. Nach Abdestillation der flüchtigen Bestandteile bis 120°C, 3hPa verbleiben 41,1 g eines feinkörnigen weißen Pulvers mit einem Festgehalt von 99,5%. Der mittels ICP-OES ermittelte Natriumgehalt beträgt 16,9 Gew.-%.

### b) Umsetzung des Siliconats aus Beispiel 2 a) mit Trimethylchlorsilan/Dimethylchlorsilan-Gemisch (9:1

1 g des in Bsp. 2 a) erhaltenen Siliconatpulvers wird in einer Mischung aus 11,2 g Isopar® E und 4 g Pyridin bei 23°C vorgelegt. Zu dieser Suspension wird eine Mischung aus 3,6 g Trimethylchlorsilan (techn. Qualität, >99%, WACKER CHEMIE AG) und 0,35 g Dimethylchlorsilan (techn. Qualität, >98%, WACKER CHEMIE AG) tropfenweise zudosiert. Die weiße Suspension lässt man 20 Stunden bei Raumtemperatur (ca. 23°C) rühren, bevor 7 g demineralisiertes Wasser zugesetzt werden. Nach 30 Minuten wird das Gemisch filtriert und von der oberen, organischen Phase des Filtrats ein ²⁹SiNMR-Spektrum aufgenommen. Neben den Signalen für Trimethylsilanol, 1,1,3,3-Tetramethyldisiloxan und Hexamethyldisiloxan findet man Signale für die M₂T-Endgruppen und MT-Kettenfragmente in einem Molverhältnis von 1 : 23,5. Das Molverhältnis ^{H}M:M- Einheiten entspricht dem der eingesetzten Chlorsilane.

### Beispiel 3

### a) Herstellung Natriummethyl-Siliconat-Pulver (Na:Si=1:1)

In einem 2L-Laborreaktor werden 600 g Isopar® E bei 50°C vorgelegt. Anschließend werden 500 g Methyltrimethoxysilan parallel mit einem Gemisch aus 321,7 g 45%iger Natronlauge und 51,1 g vollentsalztem Wasser über einen Zeitraum von einer Stunde eindosiert. Am Ende der Dosierung liegt eine trübe, zweiphasige Mischung vor. Man erhitzt die Mischung zum Sieden und trennt kontinuierlich über einen Wasserabscheider Wasser und gebildetes Methanol als untere Phase ab. Nach Abdestillation der flüchtigen Bestandteile bis 120°C, 3hPa verbleiben 363,2 g eines feinkörnigen weißen Pulvers mit einem Festgehalt von 99,8%. Der mittels ICP-OES ermittelte Natriumgehalt beträgt 21,0 Gew.-%.

### b) Umsetzung des Siliconats aus Beispiel 3 a) mit Vinyldimethylchlorsilan

20 g des in Bsp. 3 a) erhaltenen Siliconatpulvers wird in einer Mischung aus 68,2 g Isopar® E und 35,5 g Pyridin bei 24°C vorgelegt. Zu dieser Suspension werden 64 g Vinyldimethylchlorsilan innerhalb von 35 Minuten zudosiert. Die weiße Suspension lässt man 3 Stunden bei Raumtemperatur (ca. 24°C) rühren, bevor 120,5 g demineralisiertes Wasser innerhalb von 20 Minuten zugesetzt werden. Nach weiteren 2 Stunden wird der unlösliche weiße Niederschlag (17,5 g) abfiltriert. Die wässrige Phase weist einen pH-Wert von 5 auf und enthält 0,03 Gew.-% Silicium. Die klare, farblose organische Phase wird bis 70°C/1hPa am Rotationsverdampfer eingeengt. Es verbleiben danach 19,7 g einer klaren, farblosen viskosen Flüssigkeit.

Im ²⁹SiNMR-Spektrum des Rückstands findet man ausschließlich Signale für die ^{Vi}M₂T-Endgruppen und ^{Vi}MT-Kettenfragmente in einem Molverhältnis von 1 : 18,5. Zusammensetzung und Molmassenverteilung werden durch das MALDI-TOF-Spektrum bestätigt.

### Beispiel 4

### a) Herstellung Natriummethyl-Siliconat-Pulver (Na:Si=1:1)

In einem 2L-Laborreaktor wird eine Lösung von 650 g Methyltrimethoxysilan in 780 g Isopar® E bei 50°C vorgelegt. Anschließend wird eine Lösung aus 418,3 g 45%iger Natronlauge und 66,4g vollentsalztem Wasser über einen Zeitraum von einer Stunde zudosiert. Dabei steigt die Temperatur auf 63°C. Man lässt eine halbe Stunde rühren bevor zum Sieden erhitzt wird und mittels Wasserabscheider Methanol und Wasser abgetrennt werden. Dabei bildet sich eine Suspension, die bis 100°C / 10 hPa entflüchtigt wird. Das verbliebene feuchte Pulver wird eine Stunde bei 95°C und 10 hPa getrocknet. Es verbleiben 481,2 g eines feinkörnigen weißen Pulvers mit einem Festgehalt von 99,7%.

### b) Umsetzung des Siliconats aus Beispiel 4 a) mit Dimethylchlorsilan

212 g des in Bsp. 4 a) erhaltenen Siliconatpulvers werden in einer Mischung aus 756,8 g Isopar® E und 303,3 g Pyridin bei 23°C vorgelegt. Zu dieser Suspension werden 431,9 g Dimethylchlorsilan (techn. Qualität, >98%, WACKER CHEMIE AG) innerhalb von 45 Minuten zudosiert. Durch Kühlen mit einem Eisbad wird die Temperatur der Reaktionsmischung dabei unter 33°C gehalten. Die weiße Suspension lässt man 3 Stunden bei Raumtemperatur (ca. 23°C) rühren, bevor 1492 g demineralisiertes Wasser innerhalb von 17 Minuten zudosiert werden. Nach 10 Minuten werden ungelöste Feststoffe abfiltriert und die beiden flüssigen Phasen werden getrennt. Die wässrige Phase weist einen pH-Wert von 5 auf. Die klare, farblose organische Phase wird bis 100°C/1hPa am Rotationsverdampfer eingeengt. Es verbleiben danach 222,8 g einer klaren, farblosen viskosen Flüssigkeit.

Im ²⁹SiNMR-Spektrum des Rückstands findet man ausschließlich Signale für die ^{H}M₂T-Endgruppen und ^{H}MT-Kettenfragmente in einem Molverhältnis von 1 : 23,4. Zusammensetzung und Molmassenverteilung werden durch das MALDI-TOF-Spektrum bestätigt.

### Beispiel 5

### Umsetzung des Siliconats aus Beispiel 2 a) mit Vinyldimethylchlorsilan

1 g des in Beispiel 2 a) erhaltenen Siliconatpulvers wird in einer Mischung aus 11,2 g Isopar® E und 4 g Pyridin bei 23°C vorgelegt. Zu dieser Suspension werden 4 g Vinyldimethylchlorsilan (techn. Qualität, >98%, WACKER CHEMIE AG) tropfenweise zudosiert. Die weiße Suspension lässt man 20 Stunden bei Raumtemperatur (ca. 23°C) rühren, bevor 7 g demineralisiertes Wasser zugesetzt werden. Nach 30 Minuten wird das Gemisch filtriert und von der oberen, organischen Phase des Filtrats ein ²⁹SiNMR-Spektrum aufgenommen. Neben dem Signal für Vinyldimethylsilanol findet man Signale für die M₂T-Endgruppen und MT-Kettenfragmente in einem Molverhältnis von 1 : 20.

### Beispiel 6

### a) Herstellung Natriummethyl-Siliconat-Pulver (Na:Si=0,85:1)

Es wird analog Herstellungsbeispiel 1 in WO2012/022544 (PCT/EP2011/061766) ein Siliconat-Pulver durch Umsetzung von 70 g Methyltrimethoxysilan in 123 g Isopar® E und einer Mischung aus 38,3 g 45%iger Natronlauge und 10,9 g vollentsalztem Wasser und anschließender azeotroper Trocknung hergestellt. Nach Abdestillation der flüchtigen Bestandteile bis 120°C, 3hPa verbleiben 43,1 g eines feinkörnigen weißen Pulvers mit einem Festgehalt von 99,9%. Der mittels ICP-OES ermittelte Natriumgehalt beträgt 20,4 Gew.-%.

### b) Umsetzung des Siliconats aus Beispiel 6 a) mit Vinyldimethylchlorsilan

1 g des in Beispiel 6 a) erhaltenen Siliconatpulvers wird in einer Mischung aus 11,2 g Isopar® E und 4 g Pyridin bei 23°C vorgelegt. Zu dieser Suspension werden 4 g Vinyldimethylchlorsilan (techn. Qualität, >98%, WACKER CHEMIE AG) tropfenweise zudosiert. Die weiße Suspension lässt man 20 Stunden bei Raumtemperatur (ca. 23°C) rühren, bevor 7 g demineralisiertes Wasser zugesetzt werden. Nach 30 Minuten wird das Gemisch filtriert und von der oberen, organischen Phase des Filtrats ein ²⁹SiNMR-Spektrum aufgenommen. Neben dem Signal für Vinyldimethylsilanol findet man Signale für die M₂T-Endgruppen und MT-Kettenfragmente in einem Molverhältnis von 1 : 29,2.

### Beispiel 7

### a) Herstellung Natriummethyl-Siliconat-Pulver (Na:Si=1,2:1)

Es wird analog Herstellungsbeispiel 1 in WO2012/022544 (PCT/EP2011/061766) ein Siliconat-Pulver durch Umsetzung von 70 g Methyltrimethoxysilan in 123 g Isopar® E und einer Mischung aus 54,1 g 45%iger Natronlauge und 2,2 g vollentsalztem Wasser und anschließender azeotroper Trocknung hergestellt. Nach Abdestillation der flüchtigen Bestandteile bis 120°C, 3hPa verbleiben 54,4 g eines feinkörnigen weißen Pulvers mit einem Festgehalt von 99,6%. Der mittels ICP-OES ermittelte Natriumgehalt beträgt 24,9 Gew.-%.

### b) Umsetzung des Siliconats aus Beispiel 7 a) mit Vinyldimethylchlorsilan

1 g des in Beispiel 7 a) erhaltenen Siliconatpulvers wird in einer Mischung aus 11,2 g Isopar® E und 4 g Pyridin bei 23°C vorgelegt. Zu dieser Suspension werden 4 g Vinyldimethylchlorsilan (techn. Qualität, >98%, WACKER CHEMIE AG) tropfenweise zudosiert. Die weiße Suspension lässt man 20 Stunden bei Raumtemperatur (ca. 23°C) rühren, bevor 7 g demineralisiertes Wasser zugesetzt werden. Nach 30 Minuten wird das Gemisch filtriert und von der oberen, organischen Phase des Filtrats ein ²⁹SiNMR-Spektrum aufgenommen. Neben dem Signal für Vinyldimethylsilanol findet man Signale für die M₂T-Endgruppen und MT-Kettenfragmente in einem Molverhältnis von 1 : 12,5.

### Beispiel 8:

### a) Herstellung Lithiummethyl-Siliconat-Pulver (Li:Si=1:1)

Es wird analog Herstellungsbeispiel 1 in WO2012/022544 (PCT/EP2011/061766) ein Siliconat-Pulver durch Umsetzung von 65 g Methyltrimethoxysilan in 104 g Isopar® E und einer Mischung aus 19,7 g Lithiumhydroxid-Monohydrat (Aldrich) und 200 g vollentsalztem Wasser und anschließender azeotroper Trocknung hergestellt. Nach Abdestillation der flüchtigen Bestandteile bis 100°C, 10hPa verbleiben 40,6 g eines feinkörnigen weißen Pulvers mit einem Festgehalt von 99,2%. Der mittels ICP-OES ermittelte Lithiumgehalt beträgt 8,68 Gew.-%.

### b) Umsetzung des Siliconats aus Beispiel 8 a) mit Vinyldimethylchlorsilan

1 g des in Beispiel 8 a) erhaltenen Siliconatpulvers wird in einer Mischung aus 11,2 g Isopar® E und 4 g Pyridin bei 23°C vorgelegt. Zu dieser Suspension werden 4 g Vinyldimethylchlorsilan (techn. Qualität, >98%, WACKER CHEMIE AG) tropfenweise zudosiert. Die weiße Suspension lässt man 20 Stunden bei Raumtemperatur (ca. 23°C) rühren, bevor 7 g demineralisiertes Wasser zugesetzt werden. Nach 30 Minuten wird das Gemisch filtriert und von der oberen, organischen Phase des Filtrats ein ²⁹SiNMR-Spektrum aufgenommen. Neben dem Signal für Vinyldimethylsilanol findet man Signale für die M₂T-Endgruppen und MT-Kettenfragmente in einem Molverhältnis von 1 : 4.

## Patentansprüche

1. Verfahren zur Herstellung von linearen Siloxanen der allgemeinen Formel (1)
R¹R²R³SiO-[R-Si(OSiR⁴R⁵R⁶)O]ₙ-SiR¹R²R³ (1)
durch Umsetzung von Lithium- oder Natriumsalzen von Organosilanolen bestehend aus Einheiten der allgemeinen Formel (2)
R-Si(OH)₃₋ₘ(OM)ₘ (2)
von deren Hydrolyse/Kondensationsprodukten, oder von Lithium- oder Natriumsalzen von Silanolen der allgemeinen Formel (2) zusammen mit deren Hydrolyse/Kondensationsprodukten, bei denen das Molverhältnis von Lithium zu Silicium bzw. Natrium zu Silicium ≤ 1,5 beträgt,
mit Halogensilanen der allgemeinen Formel (3)
R⁷R⁸R⁹Si-Hal (3)
wobei
**m** für eine Zahl ≤ 1,5
**n** für eine Zahl von 3 bis 100
**R** für einen organischen über Kohlenstoff gebundenen Rest,
**M** für das Lithium-Kation oder das Natrium-Kation,
**Hal** für einen Halogenrest und
**R¹, R², R³, R⁴, R⁵, R⁶, R⁷, R⁸** und **R⁹** unabhängig voneinander für einen Wasserstoffrest oder einen organischen über Kohlenstoff oder Sauerstoff gebundenen Rest stehen,
mit der Maßgabe, dass mindestens zwei Reste pro Molekül der allgemeinen Formel (1) ausgewählt werden aus Wasserstoff und einem aliphatisch ungesättigten organischen Rest.

2. Lineare Siloxane der allgemeinen Formel (1)
R¹R²R³SiO-[R-Si(OSiR⁴R⁵R⁶)O]ₙ-SiR¹R²R³ (1)
wobei
**n** für eine Zahl von 3 bis 100
**R** für einen organischen über Kohlenstoff gebundenen Rest,
**R¹, R², R³, R⁴, R⁵** und **R⁶** unabhängig voneinander für einen Wasserstoffrest oder einen organischen über Kohlenstoff oder Sauerstoff gebundenen Rest stehen,
mit der Maßgabe, dass mindestens zwei Reste pro Molekül der allgemeinen Formel (1) ausgewählt werden aus Wasserstoff und einem aliphatisch ungesättigten organischen Rest und
dass, wenn keiner der Reste **R¹, R², R³** Wasserstoff oder aliphatisch ungesättigten organischen Rest bedeutet, auch mindestens eine Einheit (OSiR⁴R⁵R⁶) vorhanden ist, in der die Reste **R⁴, R⁵, R⁶** weder Wasserstoff noch aliphatisch ungesättigten organischen Rest bedeuten.

3. Verfahren nach Anspruch 1 oder lineare Siloxane nach Anspruch 2, bei dem **R** für einen einwertigen unsubstituierten oder durch Halogenatome, Alkoxy- oder Silylgruppen substituierten Kohlenwasserstoffrest mit 1 bis 18 Kohlenstoffatomen steht, bei dem keine direkte SiC-Bindung zu einem aromatischen Kohlenstoffrest besteht.

4. Verfahren oder lineare Siloxane nach einem oder mehreren der voranstehenden Ansprüche, bei dem die Reste **R¹** bis **R⁹** ausgewählt werden aus Wasserstoff-, einen C₁₋₁₀-Alkoxy-, einen C₆₋₂₀-Aryloxy- oder einen einwertigen unsubstituierten oder durch Halogenatome, Alkoxy- oder Silylgruppen substituierten Kohlenwasserstoffrest mit 1 bis 18 Kohlenstoffatomen.

5. Verfahren oder lineare Siloxane nach einem oder mehreren der voranstehenden Ansprüche, bei dem mindestens zwei Reste pro Molekül der allgemeinen Formel (1) aliphatisch ungesättigte organische Reste und kein Rest Wasserstoff bedeuten.

6. Verfahren oder lineare Siloxane nach einem oder mehreren der voranstehenden Ansprüche, bei dem mindestens zwei Reste pro Molekül der allgemeinen Formel (1) Wasserstoff und kein Rest aliphatisch ungesättigte organische Reste bedeuten.

7. Verfahren oder lineare Siloxane nach einem oder mehreren der voranstehenden Ansprüche, bei dem mindestens ein Rest pro Molekül der allgemeinen Formel (1) aliphatisch ungesättigte organische Reste und mindestens ein Rest Wasserstoff bedeuten.

8. Verfahren oder lineare Siloxane nach einem oder mehreren der voranstehenden Ansprüche, bei dem **n** in der allgemeinen Formel (1) 5 bis 60 beträgt.

9. Verfahren nach einem oder mehreren der voranstehenden Ansprüche, bei dem das Halogensilan der allgemeinen Formel (3) mindestens äquimolar bezüglich des Siliconats **A** eingesetzt wird.

10. Verfahren nach einem oder mehreren der voranstehenden Ansprüche, bei dem es sich bei den Halogensilanen der allgemeinen Formel (3) um Chlorsilane handelt.

11. Verwendung der linearen Siloxane der allgemeinen Formel (1),
mit der Maßgabe, dass mindestens zwei Reste pro Molekül der allgemeinen Formel (1) ausgewählt werden aus Wasserstoff und einem aliphatisch ungesättigten organischen Rest und
dass, wenn keiner der Reste **R¹, R², R³** Wasserstoff oder aliphatisch ungesättigten organischen Rest bedeutet, auch mindestens einer der Reste **R⁴, R⁵, R⁶** weder Wasserstoff noch aliphatisch ungesättigten organischen Rest bedeutet, als Vernetzer, als Ausgangsmaterialien für funktionelle Fluide oder als Bausteine für Siloxan-Harze.

## Claims

1. Process for producing linear siloxanes of the general formula (1)
R¹R²R³SiO-[R-Si(OSiR⁴R⁵R⁶)O]ₙ-SiR¹R²R³ (1)
by reaction of lithium or sodium salts of organosilanols consisting of units of the general formula (2)
R-Si(OH)₃₋ₘ(OM)ₘ (2)
of hydrolysis/condensation products thereof, or of lithium or sodium salts of silanols of the general formula (2) together with hydrolysis/condensation products thereof, in which the molar ratio of lithium to silicon or sodium to silicon is ≤ 1.5, with halosilanes of the general formula (3)
R⁷R⁸R⁹Si-Hal (3)
wherein
**m** is a number ≤ 1.5
**n** is a number from 3 to 100
**R** is an organic radical bonded via carbon,
**M** is the lithium cation or the sodium cation,
**Hal** is a halogen radical and
**R¹, R², R³, R⁴, R⁵, R⁶, R⁷, R⁸** and **R⁹** are each independently a hydrogen radical or an organic radical bonded via carbon or oxygen,
with the proviso that at least two radicals per molecule of the general formula (1) are selected from hydrogen and an aliphatic unsaturated organic radical.

2. Linear siloxanes of the general formula (1)
R¹R²R³SiO-[R-Si(OSiR⁴R⁵R⁶)O]ₙ-SiR¹R²R³ (1)
wherein
**n** is a number from 3 to 100
**R** is an organic radical bonded via carbon,
**R¹, R², R³, R⁴, R⁵** and **R⁶** are each independently a hydrogen radical or an organic radical bonded via carbon or oxygen,
with the proviso that at least two radicals per molecule of the general formula (1) are selected from hydrogen and an aliphatic unsaturated organic radical and
that if none of the radicals **R¹, R², R³** are hydrogen or an aliphatic unsaturated organic radical, at least one unit (OSiR⁴R⁵R⁶) is also present in which the radicals **R⁴, R⁵, R⁶** are neither hydrogen nor an aliphatic unsaturated organic radical.

3. Process according to Claim 1 or linear siloxanes according to Claim 2, in which **R** is a monovalent hydrocarbon radical having 1 to 18 carbon atoms that is unsubstituted or substituted by halogen atoms, alkoxy groups or silyl groups, in which there is no direct SiC bond to an aromatic carbon radical.

4. Process or linear siloxanes according to one or more of the preceding claims in which the radicals **R¹** to **R⁹** are selected from hydrogen, a C₁₋₁₀-alkoxy radical, a C₆₋₂₀-aryloxy radical or a monovalent hydrocarbon radical having 1 to 18 carbon atoms that is unsubstituted or substituted by halogen atoms, alkoxy groups or silyl groups.

5. Process or linear siloxanes according to one or more of the preceding claims in which at least two radicals per molecule of the general formula (1) are aliphatic unsaturated organic radicals and no radical is hydrogen.

6. Process or linear siloxanes according to one or more of the preceding claims in which at least two radicals per molecule of the general formula (1) are hydrogen and no radicals are aliphatic unsaturated organic radicals.

7. Process or linear siloxanes according to one or more of the preceding claims in which at least one radical per molecule of the general formula (1) is an aliphatic unsaturated organic radical and at least one radical is hydrogen.

8. Process or linear siloxanes according to one or more of the preceding claims in which **n** in the general formula (1) is 5 to 60.

9. Process according to one or more of the preceding claims in which the halosilane of the general formula (3) is used in at least an equimolar amount with respect to the siliconate **A.**

10. Process according to one or more of the preceding claims in which the halosilanes of the general formula (3) are chlorosilanes.

11. Use of the linear siloxanes of the general formula (1),
with the proviso that at least two radicals per molecule of the general formula (1) are selected from hydrogen and an aliphatic unsaturated organic radical and
that if none of the radicals **R¹, R², R³** are hydrogen or an aliphatic unsaturated organic radical, at least one of the radicals **R⁴, R⁵, R⁶** is also neither hydrogen nor an aliphatic unsaturated organic radical,
as crosslinkers, as starting materials for functional fluids or as units for siloxane resins.

## Revendications

1. Procédé pour la fabrication de siloxanes linéaires de la formule générale (1) :
R¹R²R³SiO-[R-Si(OSiR⁴R⁵R⁶)O]ₙ-SiR¹R²R³ (1)
par mise en réaction de sels de lithium ou de sodium d'organosilanols constitués par des unités de la formule générale (2) :
R-Si(OH)₃₋ₘ(OM)ₘ (2)
de leurs produits d'hydrolyse/de condensation, ou de sels de lithium ou de sodium de silanols de la formule générale (2) conjointement avec leurs produits d'hydrolyse/de condensation, dans lesquels le rapport en moles entre le lithium et le silicium ou entre le sodium et le silicium est ≤ 1,5,
avec des halogénosilanes de la formule générale (3) :
R⁷R⁸R⁹Si-Hal (3)
dans lesquelles
**m** représente un nombre ≤ 1,5,
**n** représente un nombre de 3 à 100,
**R** représente un radical organique relié par un carbone,
**M** représente le cation lithium ou le cation sodium,
**Hal** représente un radical halogène et
**R¹, R², R³, R⁴, R⁵, R⁶, R⁷, R⁸** et **R⁹** représentent indépendamment les uns des autres un radical hydrogène ou un radical organique relié par un carbone ou un oxygène, à condition qu'au moins deux radicaux par molécule de la formule générale (1) soient choisis parmi l'hydrogène et un radical organique aliphatiquement insaturé.

2. Siloxanes linéaires de la formule générale (1) :
R¹R²R³SiO-[R-Si(OSiR⁴R⁵R⁶)O]ₙ-SiR¹R²R³ (1)
dans laquelle
**n** représente un nombre de 3 à 100,
**R** représente un radical organique relié par un carbone,
**R¹, R², R³, R⁴, R⁵** et **R⁶** représentent indépendamment les uns des autres un radical hydrogène ou un radical organique relié par un carbone ou un oxygène,
à condition qu'au moins deux radicaux par molécule de la formule générale (1) soient choisis parmi l'hydrogène et un radical organique aliphatiquement insaturé, et
que lorsqu'aucun des radicaux **R¹, R², R³** ne signifie l'hydrogène ou un radical organique aliphatiquement insaturé, au moins une unité (OSiR⁴R⁵R⁶) soit également présente, dans laquelle les radicaux **R⁴, R⁵, R⁶** ne signifient ni l'hydrogène, ni un radical organique aliphatiquement insaturé.

3. Procédé selon la revendication 1 ou siloxanes linéaires selon la revendication 2, dans lesquels **R** représente un radical hydrocarboné monovalent non substitué ou substitué par des atomes d'halogène, des groupes alcoxy ou silyle, contenant 1 à 18 atomes de carbone, dans lequel il n'existe aucune liaison SiC directe vers un radical carboné aromatique.

4. Procédé ou siloxanes linéaires selon une ou plusieurs des revendications précédentes, dans lesquels les radicaux **R¹** à **R⁹** sont choisis parmi un radical hydrogène, un radical alcoxy en C₁₋₁₀, un radical aryloxy en C₆₋₂₀ ou un radical hydrocarboné monovalent non substitué ou substitué par des atomes d'halogène, des groupes alcoxy ou silyle, contenant 1 à 18 atomes de carbone.

5. Procédé ou siloxanes linéaires selon une ou plusieurs des revendications précédentes, dans lesquels au moins deux radicaux par molécule de la formule générale (1) signifient des radicaux organiques aliphatiquement insaturés et aucun radical ne signifie l'hydrogène.

6. Procédé ou siloxanes linéaires selon une ou plusieurs des revendications précédentes, dans lesquels au moins deux radicaux par molécule de la formule générale (1) signifient l'hydrogène et aucun radical ne signifie un radical organique aliphatiquement insaturé.

7. Procédé ou siloxanes linéaires selon une ou plusieurs des revendications précédentes, dans lesquels au moins un radical par molécule de la formule générale (1) signifie un radical organique aliphatiquement insaturé et au moins un radical signifie l'hydrogène.

8. Procédé ou siloxanes linéaires selon une ou plusieurs des revendications précédentes, dans lesquels **n** dans la formule générale (1) vaut 5 à 60.

9. Procédé selon une ou plusieurs des revendications précédentes, dans lequel l'halogénosilane de la formule générale (3) est utilisé en quantité au moins équimolaire par rapport au siliconate **A.**

10. Procédé selon une ou plusieurs des revendications précédentes, dans lequel les halogénosilanes de la formule générale (3) consistent en des chlorosilanes.

11. Utilisation des siloxanes linéaires de la formule générale (1),
à condition qu'au moins deux radicaux par molécule de la formule générale (1) soient choisis parmi l'hydrogène et un radical organique aliphatiquement insaturé, et
que lorsqu'aucun des radicaux **R¹, R², R³** ne signifie l'hydrogène ou un radical organique aliphatiquement insaturé, au moins un des radicaux **R⁴, R⁵, R⁶** ne signifie également ni l'hydrogène, ni un radical organique aliphatiquement insaturé,
en tant qu'agents de réticulation, en tant que matériaux de départ pour des fluides fonctionnels ou en tant que constituants pour des résines de siloxane.
